# EUROPEAN PATENT SPECIFICATION

(11) **EP 3 138 667 B1**
(45) Date of publication and mention of the grant of the patent: **26.12.2018**
(21) Application number: 15183608.7
(22) Date of filing: 03.09.2015
(51) Int. Cl.: B25J 11/00, B65B 25/02, B65B 35/16

(54) **A ROBOTIC DEVICE FOR SLEEVING POTTED PLANTS AND A METHOD FOR SLEEVING POTTED PLANTS WITH THE ROBOTIC SLEEVING DEVICE**
ROBOTISCHE VORRICHTUNG ZUR UMHÜLLUNG VON TOPFPFLANZEN UND VERFAHREN ZUR UMHÜLLUNG VON TOPFPFLANZEN MIT DER ROBOTISCHEN UMHÜLLUNGSVORRICHTUNG
DISPOSITIF ROBOTIQUE DE MANCHONNAGE DES PLANTES EN POT ET PROCÉDÉ DE MANCHONNAGE ASSOCIÉ À UN TEL DISPOSITIF

(43) Date of publication of application: 08.03.2017
(73) Proprietor: Spisa Holding AB, 421 32 Västra Frölunda (SE); Createch BV, 1424 PX De Kwakel (NL)
(72) Inventor: Van der Laan, Paul, 2461BK Ter Aar (NL)
(74) Representative: AWA Sweden AB

(56) References cited:
- EP-A1- 0 590 269
- EP-A2- 1 559 651
- WO-A1-01/94207
- US-A- 5 105 599

## Description

### Technical field

The present invention relates to a robotic sleeving device for potted plants and a method for sleeving potted plants with a robotic sleeving device.

### Background

Potted plants of different types are typically sold in supermarkets or stores specializing in plants. The potted plants are delivered to the stores packaged in containers, and where in each container each individual plant is sleeved in e.g. a plastic sleeve in order to reduce the amount of entanglement between the plants in the container. If the plants are edible, it is also beneficial to further separate the plants by the sleeve in order to allow each type of plant to retain its specific taste and or smell. Hence, a sleeve also reduces entanglement when a customer wishes to grab one of the sleeved plants on e.g. a shelf in a store and allows a customer to inspect the specific plant which he or she intends to buy by look and smell.

The potted plants are typically grown in a greenhouse, and when they have reached a size intended for selling they are removed from the greenhouse, and a plastic sleeve is applied manually for each potted plant by an operator and the sleeved potted plants are then packaged in containers for transport to stores. Hence, the process is time-consuming, labor intensive and tedious.

Thus, there is a general desire in the art to provide an improved process which can replace at least parts of the time-consuming, labor intensive and tedious process in order to save costs and/or time during the sleeving process.

EP0590269 discloses a robotic device for sleeving potted plants according to the preamble of claim 1.

### Summary of the invention

It is an object of the present invention to at least partly overcome problems in the prior art, and to provide an robotic device for sleeving potted plants, which in particular allows for a reduction in costs and/or time for sleeving potted plants. These and other objects that will become apparent from the following description are achieved by a robotic device according to the appended claims.

According to a first aspect of the invention, there is provided a robotic device for sleeving potted plants. The robotic device comprises a vertical shaft, at least two upper arms arranged on the vertical shaft, each one of the at least two upper arms having a gripping unit for gripping and releasing potted plants, a first picking area located at a first position radially outwards from the vertical shaft, a sleeving area located at a second position radially outwards from the vertical shaft, and a sleeving unit arranged at the sleeving area. The at least two upper arms are rotatable between the first and the second position about the vertical shaft, wherein the at least two upper arms are arranged to be movable along the vertical shaft. The device further comprises at least two lower arms arranged on the vertical shaft below the upper arms, each one of the at least two lower arms having a gripping unit for gripping and releasing potted plants, a second picking area located at third position below the second position, a loading area arranged at a fourth position below the first position. The at least two lower arms are rotatable between the third and the fourth position about the vertical shaft, and the at least two lower arms are arranged to be movable along the vertical shaft.

The first picking area and sleeving area should be understood as areas surrounding the robotic device, e.g. areas extending radially outwards from the vertical shaft. The entire area surrounding the robotic device, e.g. radially outwards from the vertical shaft, as far radially outwards as the upper arms may reach, may be understood as a working area of the robotic device, and the first picking area and the sleeving area are portions of the working area. Alternatively, the first picking area and the sleeving area may each be understood as an angular portion of the working area which is delimited to an angular extent from a first and second position respectively. Similar to the first picking area and the sleeving area, the second picking area and the loading area should be understood as areas surrounding the robotic device, e.g. areas radially outwards from the vertical shaft. The entire area surrounding the robotic device, e.g. extending radially outwards from the vertical shaft, as far radially outwards as the upper arms and/or lower arms may reach, may be understood as a working area of the robotic device, and the second picking area and the loading area are portions of the working area. Alternatively, the second picking area and the loading area may each be understood as an angular portion of the working area which is delimited to an angular extent from a third and fourth position respectively.

The upper arms may be understood as any elongated element being able to be supported by the vertical shaft and having a gripping unit suitable for potted plants. For example, any type of suitable beam or girder, or robotic arm with or without joints or articulation may be used to advantage with the present invention.

The present invention is based on the realization that a robotic device for sleeving potted plants having at least two upper arms having gripping units may perform several steps concurrently. In other words, one of the at least two upper arms may grip a potted plant at a first picking area simultaneously as the other one of the at least two arms releases another potted plant at the sleeving area. Thereby, the robotic device for sleeving potted plants according to the present invention may handle several potted plants to be sleeved simultaneously. Hence, an advantage of the robotic device is that costs may be saved as the robotic device may more quickly perform the time-consuming and labor intensive process of sleeving potted plants.

The sleeve may for example be a plastic or paper sleeve which is bag-shaped. The sleeve may have text or information thereupon. In particular, the sleeve often has information printed thereupon regarding which plant is contained in the sleeve, barcodes, etc.

In at least one exemplary embodiment, the second position may be arranged opposite the first position with respect to the vertical shaft. Likewise, the first picking area and the sleeving area may be arranged opposite each other with respect to the vertical shaft. Preferably, the picking area and sleeving area do not overlap.

In at least one exemplary embodiment, the gripping units are arranged to grip a potted plant at the first picking area and release the potted plant to the sleeving unit.

In at least one exemplary embodiment, the sleeving unit is configured to sleeve a potted plant into a bag-shaped sleeve. A bag shaped sleeve enables the sleeving unit to insert the potted plant into the sleeve from an opening at the top. Alternatively, or additionally, the upper arms may be inserted into the bag-shaped sleeve carrying the potted plant to insert the potted plant into the bag-shaped sleeve as the sleeving unit holds the bag-shaped sleeve.

Hereby, an additional advantage is that the robotic device for sleeving potted plants may in principle perform four steps or operations at the same time. The upper arms may grip a potted plant at a first picking area, and release another potted plant at the sleeving unit substantially simultaneously as the lower arms grip a sleeved and potted plant a the second picking area, and release another sleeved potted plant at the loading area. Hence, the robotic device may perform several steps or operations substantially simultaneously and is very efficient for each rotational movement of the upper and/or lower arms.

In at least one exemplary embodiment, the at least two lower arms are extendable. In other words, the two lowers arms may be extended or retracted during operation of the robotic device in order to reach specific points or portions of the picking and/or loading areas. This means that the lower arms may also be retracted during some portions of e.g. the rotational movement such that e.g. supporting structures or other components may be placed closer to the vertical shaft.

In at least one exemplary embodiment, the at least two lower arms are arranged to move independently of each other along the vertical shaft. Independent movement of the at least two lower arms enables one of the arms to be placed higher than the other one, e.g. for reaching the third position and gripping a potted plant which has been sleeved by the sleeving unit, while the other one of the at least two lower arms is in a lower position e.g. for loading a sleeved potted plant in the loading area. Hence, at least two lower arms may alternate between a higher and a lower position depending on which position and/or area they are in or travelling towards.

In at least one exemplary embodiment, the sleeving unit comprises a through hole, wherein a potted plant may be transferred from the sleeving area to the second picking area, through the sleeving unit. Thereby, the sleeving unit may receive a potted plant from the upper arms, which is transported through the sleeving unit to the second picking areas while being sleeved, in order to be gripped by the lower arms.

In at least one exemplary embodiment, the at least two upper arms and/or the at least two lower arms are attached to the vertical shaft such that the at least two upper arms and/or the at least two lower arms rotate as the vertical shaft rotates about a central axis of the vertical shaft. This means that by rotating the vertical shaft both the upper and lower arms rotate about the vertical shaft, e.g. between the first picking area and the sleeving area, and between the second picking area and the loading area. An advantage is thus that only the vertical shaft needs to rotate, and no additional mechanism is needed for the upper and/or lower arms to rotate about the vertical shaft. The vertical shaft may rotate half a revolution in one direction, and then half a revolution in the opposite direction. Alternatively, the vertical shaft may rotate half a revolution in one direction, and then half a revolution in the same direction

In at least one exemplary embodiment, the at least two upper arms are diametrically opposed with respect to the vertical shaft and/or the at least two lower arms are diametrically opposed with respect to the vertical shaft. That the at least two upper and/or lower arms are diametrically opposed means that by rotating the vertical shaft a half revolution, i.e. 180 degrees, the upper and/or lower arms may travel between the first picking area and sleeving area, and between the second picking area and loading area, respectively.

In at least one exemplary embodiment, the at least two upper arms are arranged to move simultaneously along the vertical shaft. This means that only one mechanism is required for providing a movement of the upper arms along the shaft.

In at least one exemplary embodiment, the gripping units on the at least two upper arms are configured to be inserted horizontally below the rim of a potted plant provided in the first picking area. Thereby, there is less risk that the gripping units will harm or entangle with portions of the potted plant. Further, the gripping unit may be made in a mechanically simple manner. This means that the gripping unit may be cheap, and/or easily replaced.

In at least one exemplary embodiment, the gripping units on said at least two upper arms may comprise at least one prong, and the prong may comprise an air inlet, an air channel and at least one air outlet arranged at a lower end of the prong. During operation a jet of air may be ejected through the at least one air outlet in order to avoid the leaves of the plant to be harmed during insertion of the plant into the sleeve. In other words, the lower end of the prong have at least one air outlet which eject air continuously, or intermittently, upwards, which prevents the leaves of the plants being inserted into a sleeve from snagging or otherwise being harmed by the sleeve.

In at least one exemplary embodiment, at least one of the vertical shaft and/or the upper arms and/or the lower arms and/or the gripping units are actuated by at least one of pneumatic power, hydraulic power, or electric power. It should of course be noted that the different components may be actuated by different mechanisms, e.g. the gripping units may be adapted to be actuated pneumatically while the vertical shaft may be adapted to be actuated electrically.

In at least one exemplary embodiment, the robotic device further comprises a control unit for controlling the actuation at least one of the vertical shaft and/or the upper arms and/or the lower arms and/or the gripping units. The control unit may comprise a microprocessor with thereupon stored computer program code. Alternatively, the control unit may comprise a general purpose processor and a non-transitory memory which stores computer program code, which code when executed by the processor causes the robotic device to perform the operations for sleeving a potted plant.

In at least one exemplary embodiment, the robotic device comprises at least three upper arms and/or at least three lower arms. Alternatively, the robotic device may comprise more than three upper arms and/or three lower arms. Hence, it should be understood that with appropriate modifications, the robotic device may comprise more than two upper and/or lower arms. Thereby, the rotational movement about the vertical shaft, to each position, may be smaller. Further, if one of the arms and/or gripping units breaks down the robotic device may still provide a highly efficient sleeving solution, without using the broken arm or gripping unit, until maintenance and repairs may be performed.

According to a second aspect of the present invention, a robotic sleeving system for potted plants is provided. The robotic sleeving system comprises a first robotic sleeving device according to the first aspect of the invention, a first transport device for transporting a holder carrying potted plants along a first path to the first picking area, the first picking area being located on the first path, and the first transport device is arranged to transport the potted plants such that the gripping unit of the at least two upper arms is inserted below the rim of the of a potted plant. The first transport device may be any type of conventional transport device such as a conveyor, rollers etc. The holder may for example be the harvest tray described in co-pending European patent application 15174555.1 by the same applicant. The harvest tray is especially suitable for a gripping unit which is inserted below the rim of a potted plant. The insertion of the gripping units below the rim of the potted plant may be achieved by actuating the transport device while the gripping units and upper arms remain stationary.

In at least one exemplary embodiment, the robotic sleeving system further comprises a second transport device for transporting a holder carrying sleeved potted plants from the loading area along a second path below the first path, the loading area being located on the second path. The second transport device may be any type of conventional transport device such as a conveyor, rollers etc. The holder carrying the sleeved potted plants may be a package for later distribution of the potted plants to e.g. a storage or transportation to a store.

In at least one exemplary embodiment, the robotic sleeving system further comprises a second robotic sleeving device according to the first aspect of the invention on a second side of the path, and the first robotic sleeving device is arranged on a first side of the first path, the second side being opposite the first side. The second robotic sleeving device further allows the system to speed up the sleeving of potted plants where each of the robotic devices sleeve a potted plant from opposite sides of the first transport device, and then load sleeved potted plants on the second transport device. Thereby, an efficient robotic sleeving system is provided.

According to a third aspect of the present invention, there is provided a method for sleeving potted plants with a robotic device. The method comprises gripping a first potted plant at a first position radially outwards from a vertical shaft with a first gripping unit attached to a first arm arranged on the vertical shaft, releasing a second potted plant at a second position, from a second gripping unit attached to a second arm into a sleeving unit, rotating the first and second arms about the vertical shaft, and gripping a third potted plant with the second gripping unit, and releasing the first potted plant from the first gripping unit into the sleeving unit. The method further comprises the steps of gripping the second potted plant at a third position below the second position with a third gripping unit attached to a third arm arranged on the vertical shaft, releasing a fourth potted plant at a fourth position, from a fourth gripping unit attached to a fourth arm at a loading area.

This third aspect of the invention may exhibit the same or similar features, advantages and/or technical effects as the first aspect. The method may, but need not, be carried out by a robotic device according to the first aspect of the present invention or be a robotic sleeving system according to the second aspect of the present invention.

In at least one exemplary embodiment, the step of rotating the first and second arms about the vertical shaft also rotates the third and fourth arms about the vertical shaft.

In general several of the steps may occur simultaneously during the method. For example, the gripping units of the upper arms may grip a potted plant at the first picking area and release a second potted plant at the sleeving area simultaneously and/or as one of the lower arms release a sleeved potted plant at the loading area. As soon as the potted plant released at the sleeving area by the sleeving unit is sleeved, the gripping unit of the other lower arm may grip the sleeved potted plant and the vertical shaft may rotate such that the process may be repeated.

Generally, all terms used in the description or claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

Further features of, and advantages with, the present invention will become apparent when studying the appended claims and the following description. The skilled person realizes that different features of the present invention may be combined to create embodiments other than those described in the following, without departing from the scope of the present invention.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements.
Figure 1a schematically shows a perspective view of a robotic sleeving device according to one embodiment of the first aspect of the invention.
Figure 1b schematically shows a perspective view of an exemplary embodiment of the gripping units for the upper arms.
Figure 2 schematically shows an at least partly cross-sectional side view of a robotic sleeving device according to another embodiment of the first aspect of the invention.
Figures 3a and 3b schematically shows at least partly cross-sectional top views of a robotic sleeving device according to another embodiment of the invention.
Figure 4 schematically shows an at least partly cross-sectional top view of a robotic sleeving system according to another aspect of the invention.
Figure 5 shows a perspective view of a robotic sleeving system according to at least one embodiment of the invention.

### Detailed description

In the present detailed description, embodiments of a robotic device for sleeving potted plants according to the present invention are mainly discussed with reference to views showing a robotic device for sleeving potted plants according to various embodiments of the invention. It should be noted that this by no means limits the scope of the invention, which is also applicable in other circumstances for instance with other types or variants of arms, vertical shafts, or plants than the embodiments shown in the appended drawings. Further, that specific features are mentioned in connection to an embodiment of the invention does not mean that those components cannot be used to an advantage together with other embodiments of the invention.

The robotic device according to the present invention is suitable for sleeving potted plants. When potted plants originating from a greenhouse arrives at the robotic device (especially on holders carrying potted plants), it is important to carefully handle the potted plants, sleeve them, and package or place the sleeved potted plants on a holder which transports them to a warehouse or another type of short storage before being delivered to the stores where the sleeved potted plants are sold.

Generally, the robotic sleeving device has diametrically opposed upper arms which rotate about a vertical shaft. The upper arms have gripping units in order to, simultaneously, pick up plants at a picking area and release them into a sleeving device at a sleeving area which is located at a second position opposite the first position. The robotic device thus performs several operations during or between the rotational movements of the vertical shaft.

The sleeving device discussed below is preferably a typical sleeving device using plastic or paper sleeves which are bag-shaped for sleeving the potted plants.

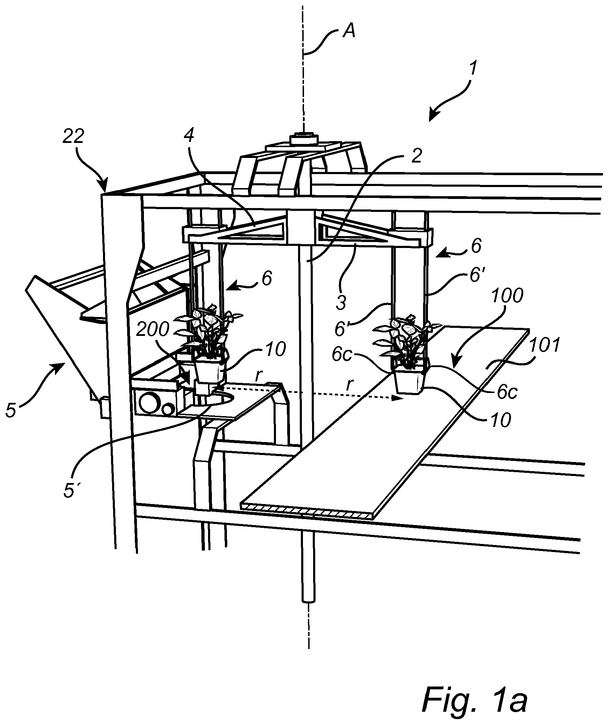

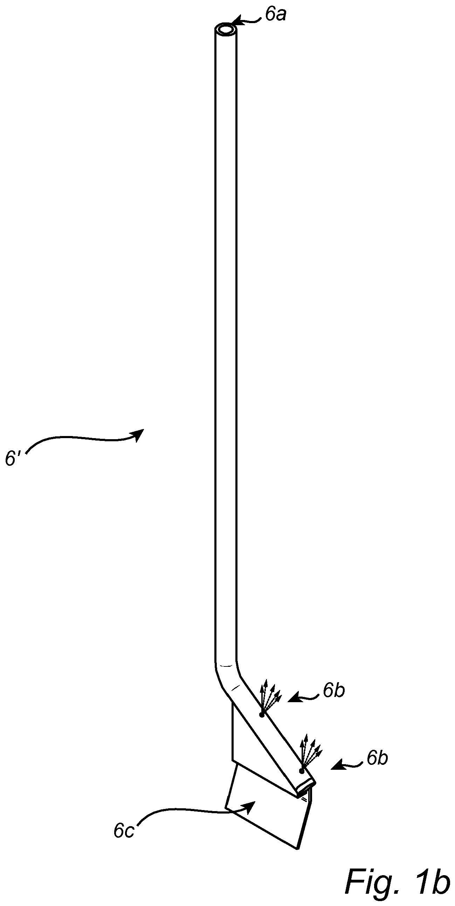

Figure 1 illustrates a robotic device 1 for sleeving potted plants according to a first embodiment of the present invention. The robotic device 1 is a device for sleeving potted plants. The potted plants may for instance be an edible herb, such as a basil, mint, dill, or parsley.

The robotic device 1 comprises a vertical shaft 2, a pair of diametrically opposed upper arms 3, 4 and a sleeving unit 5. There is a supporting structure 22, such as the frame 22 illustrated, which supports and hold the other components in place. The frame 22 may be made of general purpose beams and connection.

The vertical shaft 2 may have a cylindrical or substantially square cross section. The pair of diametrically opposed upper arms 3, 4 is attached to the vertical shaft in order to rotate as the vertical shaft 2 rotate. The vertical shaft 2 is rotatably connected to the frame 22 which support the vertical shaft in an upright position. The vertical shaft 2 has a central or main axis A around which the vertical shaft 2 rotates.

Each one of the pair of diametrically opposed upper arms 3, 4 have a gripping unit 6 for gripping and releasing potted plants 10. The pair of upper arms 3, 4 are arranged to move up or down along the vertical shaft 2. The upper arms 3, 4 may move together or separately up and down the vertical shaft 2. Preferably, the upper arms 3, 4 are connected to each other such that they move together and simultaneously. The gripping units 6 of the upper arms 3, 4 are preferably configured to be inserted horizontally below the rim of the potted plant 10. Hence, the gripping units 6 may be, as illustrated, in the form of an elongated tong having two prongs 6'. Each prong has and end piece 6c arranged at the lower end. The end piece 6c extends towards the other prong of the gripping unit 6 in order to be inserted below the rim of the potted plant 10. The gripping unit 6 may be configured to pinch.

The robotic device 1 further comprises a first picking area 100 and a sleeving area 200. The first picking area 100 and sleeving area 200 are located at a first and a second position respectively. The first and second positions are arranged radially outwards at a distance r from the vertical shaft 2. The distance r may be in the range 0.25 to 1.5 m. The first picking area 100 and the sleeving area 200 are located in opposite directions from the vertical shaft 2. Hence, a working area of the robotic device 1 may be defined as circular area comprised within a radial extent r of 0.25 m to 1.5 m from the vertical shaft 2. The first picking area 100 is the portion of the working area which is covered by a transport device 100, and the sleeving area 200 is the portion of the working area which is covered by the sleeving unit 5. Alternatively, the first picking area 100 and the sleeving area 200 may each be defined as an angular portion of the working area which is delimited to a number of degrees of the working area. Each of the first picking area and the sleeving area may cover a range of 0-90 degrees of an angular portion of the working area.

The sleeving unit 5 is arranged at the sleeving area 200. The sleeving unit 5 comprises a through hole 5'. A potted plant may be transferred from the sleeving area 200 to further areas, through the through hole 5' of the sleeving unit 5.

In use, a first potted plant 10 arrives via a transport device 101 to the first picking area 100. The transport device 101 may be a belt or conveyer. The first upper arm 3 grips the first potted plant with the gripping unit 6 at the first position, i.e. the first picking area 100. The potted plant 10 may be inserted into the gripping unit 6 by controlling the transport device 101 to transport the potted plant into the stationary gripping unit 6. The gripping units 6 preferably grip the potted plant 6 below the rim of the potted plant. Alternatively, the upper arm 3 may be rotated such that the gripping unit 6 is inserted below the rim of the potted plant. Simultaneously, a second potted plant is released from the second upper arm 4 at the sleeving area 200 into the sleeving unit 5. The pair of upper arms are then raised, i.e. move in an upwards direction, along the vertical shaft 2 in order for the gripping unit 6 to remove the potted plant from the transport device without dragging the potted plant along the surface of the transport device 101. The vertical shaft 2 is then rotated 180 degrees about the vertical shaft, after which the pair of upper arms are lowered along the vertical shaft 2. A third potted plant is then gripped by the gripping unit 6 of the second arm 4 in the same manner as described for the first potted plant and the first upper arm 3. The gripping unit 6 of the first upper arm 3 releases the first plant at the sleeving area 200. The sleeving unit 5 sleeves the potted plants received at the sleeving area 200, e.g. released into the sleeving unit 5, for example by feeding the potted plants through the through hole 5' while simultaneously holding a sleeve. The gripping units 6 may enter the sleeve being held by the sleeving unit 5 while carrying a potted plant.

This process continues until there are no more potted plants to be sleeved. It is of course possible that the second arm, during the first action does not release a potted plant as the gripping unit 6 at that point in time does not hold a potted plant.

The sleeving unit 5 may be any suitable sleeving device known in the art. For example, the sleeving unit 5 may have a magazine or holder for folded sleeves, and suctions cups which retract in order to open and hold the sleeves such that the potted plants may enter the sleeve.

Figure 1b schematically shows a perspective view of an alternative embodiment of a gripping unit 6 for the upper arms 3, 4. As mentioned above, the gripping units 6 may be in the form of a pair of prongs, where one prong is illustrated in figure 1b. The prong 6' further comprises an air inlet 6a, an air channel running along the inside of the prong and two air outlets 6b arranged at a lower end of the prong 6'. The air inlet 6a is thus fluidly connected to the air outlets 6b via the air channel. During operation, as the potted plant is inserted into a sleeve, a jet of air is ejected through the air outlets 6b in order to avoid the leaves of the plant to be snag or be harmed by the sleeve. The air being supplied to the air inlet 6a for providing a jet of air through the air outlets 6b may be supplied by any known means for doing so, e.g. a compressor and electrically controlled valves or the like.

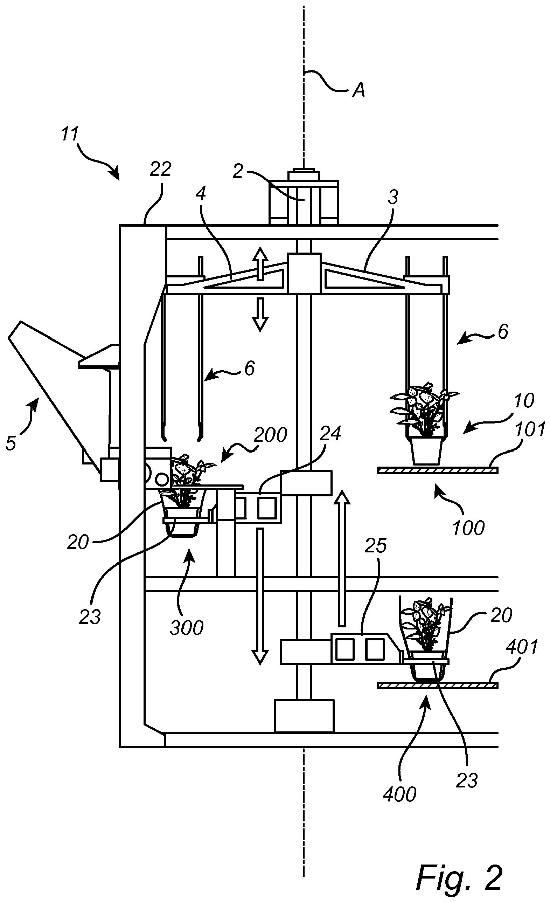

Figure 2 shows an at least partly cross-sectional side view of a robotic sleeving device 11 according to another embodiment of the invention. The robotic sleeving device 11 shown in figure 2 is similar to the robotic sleeving device 1 shown in figure 1 and further comprises a pair of diametrically opposed lower arms 24, 25. Each one of the pair of lower arm has a gripping unit 23 for gripping and releasing sleeved potted plants. The gripping unit 23 is different from the gripping unit 6 of the upper arms, as the sleeve may prevent insertion from above for gripping a sleeved potted plant 20. The gripping units 23 may therefore be understood as claws or pinchers which grip around the sleeved potted plant 20.

The robotic sleeving device 11 comprises a second picking area 300 and a loading area 400. The second picking area 300 is located at third position below the second position. The loading area 400 is arranged at a fourth position below the first position. In other words, the second picking area 300 is arranged below the sleeving area 200, and the loading area 400 is arranged below the first picking area 100.

Similar to the first picking area 100 and the sleeving area 200 described above, the second picking area 300 and the loading area 400 are portions of the working area of the robotic sleeving device 11. Although, the second picking area 300 and the loading area 400 are located at a lower lever, below the first picking area 100 and the sleeving area 200, of the robotic sleeving device 11. The third picking area 100 is the portion of the working area which is covered by the sleeving unit 5, below the sleeving unit 5. The loading area 400 is the portion of the working area which is covered by a second transport device 401. Alternatively, the second picking area 300 and the loading area 400 may each be defined as an angular portion of the working area which is delimited to a number of degrees of the working areas. Each of the second picking area 300 and the loading area 400 may cover a range of 0-90 degrees of an angular portion of the working area.

The lower arms 24, 25 are rotatable between the third and the fourth position about the vertical shaft 2. The two lower arms 24, 25 are attached to the vertical shaft 2 such that they rotate as the vertical shaft rotates 2. Further, the two lower arms 24, 25 are arranged to be movable along the vertical shaft 2. In particular, the two lower arms 24, 25 may move independently up and down along the vertical shaft 2. The two lower arms 24, 25 are extendable and retractable such that they may reach sleeved potted plants 20 in the second picking area 300 and the loading area 400.

In use, a first potted plant 10 arrives via the first transport device 101 to the first picking area 100. The first upper arm 3 grips the first potted plant with the gripping unit 6 at the first position, i.e. the first picking area 100. Simultaneously, a second potted plant is released from the second upper arm 4 at the sleeving area 200 into the sleeving unit 5. The second potted plant is sleeved by the sleeving unit 5. The sleeved second potted plant is then gripped at the third position by the gripping unit 23 arranged on the third arm 24. Simultaneously, the gripping unit 23 of the fourth arm 25 releases a sleeved potted plant at the loading area 400. The pair of upper arms are then raised, i.e. move in an upwards direction, along the vertical shaft 2 in order for the gripping unit 6 to remove the potted plant from the transport device without dragging the potted plant along the surface of the transport device 101.

Then, the vertical shaft 2 is rotated, and as the vertical shaft 2 rotates the third arm 24 moves down along the vertical shaft 2, and the fourth arm 25 moves up along the vertical shaft 2. The speed of the movement along the vertical shaft 2 of the lower arms 24, 25 may be configured such that the third arm reaches the loading area as the vertical shaft has turned 180 degrees and the fourth arm 25 reaches the second picking area as the vertical shaft has turned 180 degrees. Alternatively, the third and fourth arm 24, 25 may move slower along the shaft than the time it takes for the vertical shaft 2 to rotate half a revolution. Alternatively, the third and fourth arm may move at different speeds up and down the vertical shaft 2. After the vertical shaft 2 has rotated the pair of upper arms are lowered along the vertical shaft 2

When the vertical shaft 2 has rotated, a third potted plant is gripped by the gripping unit 6 of the second arm 4 and gripping unit 6 of the first arm release the first plant into the sleeving unit 5. The third arm 24 releases a sleeved and potted plant 20 into the loading area 400 onto a second transport device 401. There may be transport holders (not shown) being fed on the second transport device 401 such that the lower arms 24, 25 fill transport holders. Transport holders facilitate later handling of the sleeved potted plants. The second transport device 401 may be a belt or conveyer. The sleeving unit 5 sleeves the first potted plant, and the gripping unit 23 of the fourth arm 25 grips the sleeved potted plant 5 in the second picking area 300.

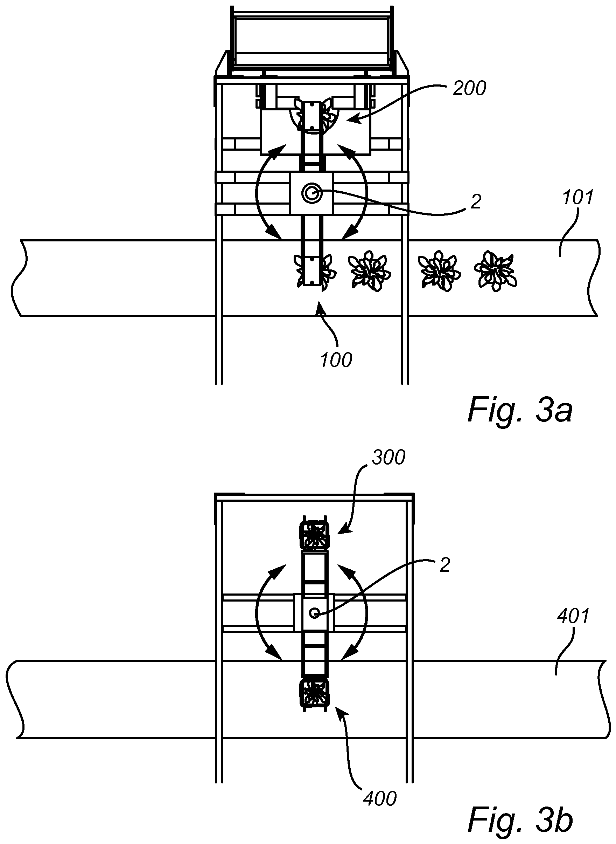

Figure 3a is schematic cross sectional top view showing the first picking area 100 and the sleeving area 200. The arrows indicated that the vertical shaft 2 may rotate in either direction. Figure 3b is schematic cross sectional top view showing the second picking area 300 and the loading area 400. The arrows indicated that the vertical shaft 2 may rotate in either direction. Preferably, the vertical shaft 2 rotates half a revolution in one direction, and then half a revolution back in the other direction.

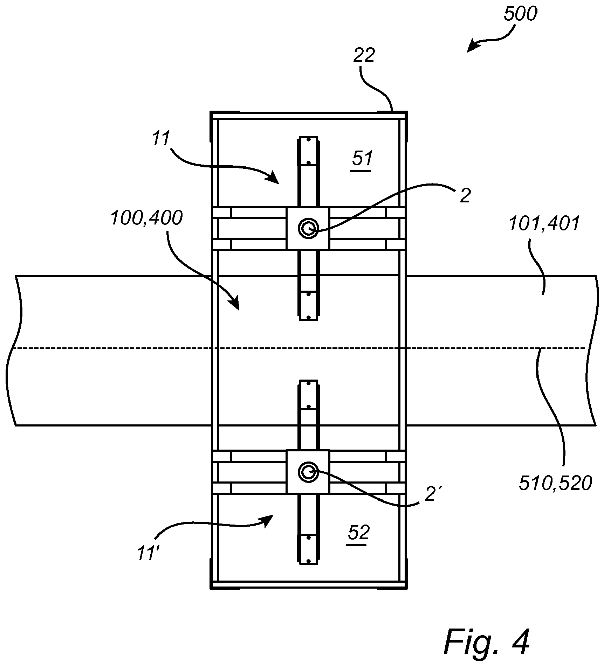

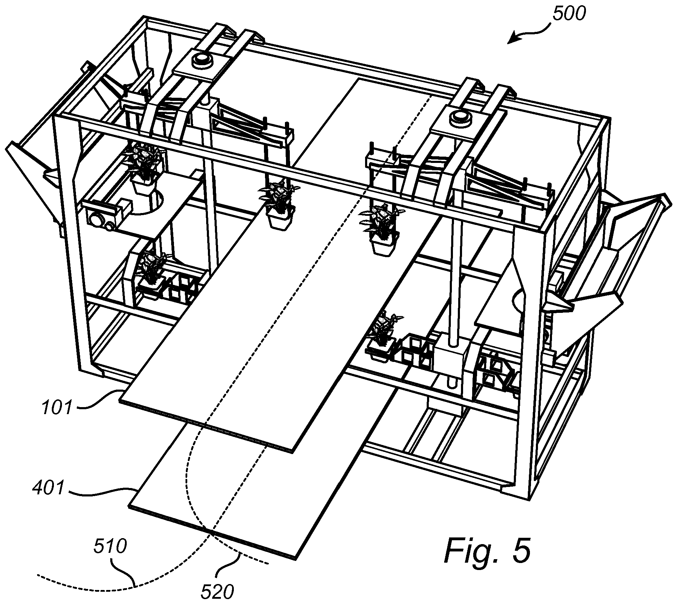

Figures 4 and 5 shows a robotic sleeving system 500 for potted plants, the robotic sleeving system comprises a first and second robotic sleeving device 11, 11' as described above. The first robotic sleeving device 11 is arranged on the first side 51 of a first path 510, and the second robotic sleeving device 11' is arranged on a second side 52 of the first path 510, the second side 52 being opposite the first side 51.

The first and second transport devices 101, 401 are both indicated in figure 4, as the functionality is the same for both levels of the robotic sleeving system 500. The first transport device 101 is arranged to transport a holder carrying potted plants along the first path 510 to the first picking area 100. The first picking area 100 may be understood as the area within the middle section of the frame 22 as seen in figure 4. The second transport device 401 is arranged to transport a holder carrying sleeved potted plants along a second path 520 from the loading area 400. The loading area 400 may be understood as the area within the middle section of the frame 22 as seen in figure 4.

The first and second robotic sleeving devices 11, 11' may pick potted plants from the same holder. Alternatively, the first and second robotic sleeving devices 11, 11' may each pick potted plants from different holders.

The first and second path 510, 520 are thus two paths which the first and second transport devices 101, 401 respectively, follow. The paths 510, 520 overlap at the first picking area 100 and at the loading area 400. However, outside of that constraint the paths 510, 520 need not overlap. The paths may be curved, as illustrated in figure 5 or straight in either 2D or 3D space. In an alternative embodiment (not shown) the first and/or second transport device 101 may be two separate conveyers or belts on which a holder for potted plants is transported for each robotic sleeving device 11, 11'. Hence, the skilled addressee realizes that there are many possible solutions and ways to arranged or provide transport devices for the robotic sleeving system 500.

The robotic sleeving system 500 shown in figures 4 and 5 utilizes the same transport devices 101, 401 for two separate robotic sleeving devices 11, 11'. This means that potted plants arriving on the first transport device 101 may be sleeved and packaged, e.g. loaded onto the second transport device 401 in large quantities quickly.

In general it should of course be understood that the robotic sleeving device 11 shown in figures 1 to 3, and the robotic sleeving system 500 shown in figures 4 and 5 may be controlled in any known manner. For example, the robotic sleeving device or system may comprise a control unit which determines how each device is to be activated. The control unit may be placed internally or externally (remote) and be connected either wired or wirelessly to the robotic devices and transport devices. Such a control unit may comprise circuits and electronics suitable for performing the purpose and operation of the robotics sleeving device. Alternatively, the control unit may comprise computer readable instructions stored on a non-transistory memory and a processor.

The vertical shaft, the upper and lower arms, and the gripping units may be controlled, actuated or operated using pneumatic, electric or hydraulic means. Further, the robotic sleeving device and the robotic sleeving system may comprise sensor and detectors for ensuring that the operations are performed correctly. For example, the position of the vertical shaft and the upper and lower arms may be detected. Further, the gripping units may detect the resistance to the gripping action, e.g. if there is plant in the gripping units Thereby, operation may be halted if a malfunction is detected.

In the appended drawings the potted plants and the sleeved potted plants are shown being transported on transport devices singularly. It should be noted that the present invention further draws advantages from the use of a harvest tray disclosed in co-pending European patent application 15174555.1 by the same applicant. The contents of which are herein included by reference. The harvest tray is especially suitable for a gripping unit which is inserted below the rim of a potted plant

The person skilled in the art realizes that the present invention by no means is limited to the preferred embodiments described above. On the contrary, many modifications and variations are possible within the scope of the appended claims. For example, although potted plants have been used in the described embodiments, the inventive robotic device may also be used with other items which need to be sleeved. Also, the above embodiments and variants may be combined in several ways.

## Claims

1. A robotic sleeving device (1, 11) for potted plants (10), said device comprising:
- a vertical shaft (2);
- at least two upper arms (3,4) arranged on said vertical shaft (2), each one of said at least two upper arms (3,4) having a gripping unit (6) for gripping and releasing potted plants (10);
- a first picking area (100) located at a first position radially outwards from said vertical shaft (2);
- a sleeving area (200) located at a second position radially outwards from said vertical shaft (2);
- a sleeving unit (5) arranged at said sleeving area (200);
wherein said at least two upper arms (3, 4) are rotatable between said first and said second position about said vertical shaft (2), wherein said at least two upper arms (3, 4) are arranged to be movable along said vertical shaft (2);
**characterized by**
- at least two lower arms (24, 25) arranged on said vertical shaft (2) below said upper arms (3, 4), each one of said at least two lower arms (24, 25) having a gripping unit (23) for gripping and releasing potted plants (20);
- a second picking area (300) located at third position below said second position;
- a loading area (400) arranged at a fourth position below said first position;
wherein said at least two lower arms (24, 25) are rotatable between said third and said fourth position about said vertical shaft (2), wherein said at least two lower arms (24, 25) are arranged to be movable along said vertical shaft (2).

2. A robotic sleeving device (1) according to claim 1, wherein said gripping units (6) are arranged to grip a potted plant at said first picking area (100) and release said potted plant (10) to said sleeving unit (5).

3. A robotic sleeving device (11) according to claim 1 or 2, wherein said at least two lower arms (24, 25) are extendable.

4. A robotic sleeving device (11) according to any one of claims 1 - 3, wherein said at least two lower arms (24, 25) are arranged to move independently of each other along said vertical shaft (2).

5. A robotic sleeving device (11) according to any one of the preceding claims, wherein said sleeving unit (5) comprises a through hole (5'), wherein a potted plant (10) may be transferred from said sleeving area (200) to said second picking area (300), through said sleeving unit (5).

6. A robotic sleeving device (11) according to any one of the preceding claims, wherein said at least two upper arms (3, 4) and/or said at least two lower arms (24, 25) are attached to said vertical shaft (2) such that said at least two upper arms (3, 4) and/or said at least two lower arms (24, 25) rotate as said vertical shaft (2) rotates about a central axis (A) of said vertical shaft (2).

7. A robotic sleeving device (11) according to any one of the preceding claims, wherein said at least two upper arms (3, 4) are diametrically opposed with respect to said vertical shaft (2) and/or said at least two lower arms (24, 25) are diametrically opposed with respect to said vertical shaft.

8. A robotic sleeving device (11) according to any one of the preceding claims, wherein said gripping units (6) on said at least two upper arms (3, 4) are configured to be inserted horizontally below the rim of a potted plant (10) provided in said first picking area (100).

9. A robotic sleeving device (11) according to any one of the preceding claims, wherein said gripping units (6) on said at least two upper arms (3, 4) comprises at least one prong (6'), and wherein said at least one prong comprises an air inlet (6a), an air channel and at least one air outlet (6b) arranged at a lower end of said prong (6').

10. A robotic sleeving system (500) for potted plants, said robotic sleeving system comprising:
- a first robotic sleeving device (11) according to any one of the preceding claims;
- a first transport device (101) for transporting a holder carrying potted plants along a first path (510) to said first picking area (100), said first picking area (100) being located on said first path (510); and
- wherein said first transport device (101) is arranged to transport said potted plants such that said gripping unit (6) of said at least two upper arms (3, 4) may be inserted below the rim of the of a potted plant (10).

11. A robotic sleeving system (500) for potted plants according to claim 10, further comprising:
- a second transport device (401) for transporting a holder carrying sleeved potted plants (20) from said loading area (400) along a second path (520) below said first path (510), said loading area (400) being located on said second path (520).

12. A robotic sleeving system (500) for potted plants according to any one of claims 10-11, further comprising:
- a second robotic sleeving device (11') according to any one of claims 1-9 arranged on a second side (52) of said first path (510), and said first robotic sleeving device (11) is arranged on a first side (51) of said first path (510), said second side (52) being opposite said first side.

13. A method for sleeving potted plants with a robotic sleeving device (1, 11), said method comprising:
- gripping a first potted plant (10) at a first position radially outwards from a vertical shaft (2) with a first gripping unit (6) attached to a first arm (3) arranged on said vertical shaft (2);
- releasing a second potted plant (10) at a second position, from a second gripping unit (6) attached to a second arm (4) to a sleeving unit (5);
- rotating said first and second arms (3, 4) about said vertical shaft (2);
- gripping a third potted plant (10) with said second gripping unit (6), and releasing said first potted plant (10) from said first gripping unit (6) into said sleeving unit (5) **characterized in that** the method further comprises:
- gripping said second potted plant at a third position below said second position with a third gripping unit (23) attached to a third arm (24) arranged on said vertical shaft (2);
- releasing a fourth potted plant at a fourth position, from a fourth gripping unit (23) attached to a fourth arm (25), said fourth arm (25) being arranged on said vertical shaft (2), at a loading area (400).

14. A method for sleeving potted plants according to claim 13, wherein said step of rotating said first and second arms (3, 4) about said vertical shaft also rotates said third and fourth arms (24, 25) about said vertical shaft (2).

## Patentansprüche

1. Robotische Umhüllungsvorrichtung (1, 11) für Topfpflanzen (10), die Vorrichtung umfassend:
- eine vertikale Welle (2);
- zumindest zwei Oberarme (3, 4), die auf der vertikalen Welle (2) angeordnet sind, wobei jeder der zumindest zwei Oberarme (3, 4) eine Greifeinheit (6) zum Ergreifen und Freigeben von Topfpflanzen (10) aufweist;
- eine erste Aufnahmefläche (100), die sich an einer ersten Position radial auswärts von der vertikalen Welle (2) befindet;
- eine Umhüllungsfläche (200), die sich an einer zweiten Position radial auswärts von der vertikalen Welle (2) befindet;
- eine Umhüllungseinheit (5), die an der Umhüllungsfläche (200) angeordnet ist;
wobei die zumindest zwei Oberarme (3, 4) zwischen der ersten und zweiten Position um die vertikale Welle (2) drehbar sind, wobei die zumindest zwei Oberarme (3, 4) entlang der vertikalen Welle (2) beweglich angeordnet sind;
**gekennzeichnet durch**
- zumindest zwei Unterarme (24, 25), die auf der vertikalen Welle (2) unter den Oberarmen (3, 4) angeordnet sind, wobei jeder der zumindest zwei Unterarme (24, 25) eine Greifeinheit (23) zum Ergreifen und Freigeben von Topfpflanzen (20) aufweist;
- eine zweite Aufnahmefläche (300), die sich an einer dritten Position unter der zweiten Position befindet;
- eine Ladefläche (400), die an einer vierten Position unter der ersten Position angeordnet ist;
wobei die zumindest zwei Unterarme (24, 25) zwischen der dritten und vierten Position um die vertikale Welle (2) drehbar sind, wobei die zumindest zwei Unterarme (24, 25) entlang der vertikalen Welle (2) beweglich angeordnet sind.

2. Robotische Umhüllungsvorrichtung (1) nach Anspruch 1, wobei die Greifeinheiten (6) angeordnet sind, eine Topfpflanze an der ersten Aufnahmefläche (100) zu ergreifen und die Topfpflanze (10) an die Umhüllungseinheit (5) freizugeben.

3. Robotische Umhüllungsvorrichtung (11) nach Anspruch 1 oder 2, wobei die zumindest zwei Unterarme (24, 25) verlängerbar sind.

4. Robotische Umhüllungsvorrichtung (11) nach einem der Ansprüche 1 - 3, wobei die zumindest zwei Unterarme (24, 25) angeordnet sind, sich unabhängig voneinander entlang der vertikalen Welle (2) zu bewegen.

5. Robotische Umhüllungsvorrichtung (11) nach einem der vorangehenden Ansprüche, wobei die Umhüllungseinheit (5) ein Durchgangsloch (5') umfasst, wobei eine Topfpflanze (10) durch die Umhüllungseinheit (5) von der Umhüllungsfläche (200) zur zweiten Aufnahmefläche (300) überführt werden kann.

6. Robotische Umhüllungsvorrichtung (11) nach einem der vorangehenden Ansprüche, wobei die zumindest zwei Oberarme (3, 4) und/oder die zumindest zwei Unterarme (24, 25) an der vertikalen Welle (2) so befestigt sind, dass die zumindest zwei Oberarme (3, 4) und/oder die zumindest zwei Unterarme (24, 25) drehen, während die vertikale Welle (2) um eine Mittelachse (A) der vertikalen Welle (2) dreht.

7. Robotische Umhüllungsvorrichtung (11) nach einem der vorangehenden Ansprüche, wobei die zumindest zwei Oberarme (3, 4) in Bezug auf die vertikale Welle (2) diametral entgegengesetzt angeordnet sind und/oder die zumindest zwei Unterarme (24, 25) in Bezug auf die vertikale Welle diametral entgegengesetzt angeordnet sind.

8. Robotische Umhüllungsvorrichtung (11) nach einem der vorangehenden Ansprüche, wobei die Greifeinheiten (6) auf den zumindest zwei Oberarmen (3, 4) gestaltet sind, horizontal unter dem Rand einer Topfpflanze (10) eingesetzt zu werden, die in der ersten Aufnahmefläche (100) bereitgestellt ist.

9. Robotische Umhüllungsvorrichtung (11) nach einem der vorangehenden Ansprüche, wobei die Greifeinheiten (6) auf den zumindest zwei Oberarmen (3, 4) zumindest eine Zinke (6') umfassen und wobei die zumindest eine Zinke einen Lufteinlass (6a), einen Luftkanal und zumindest einen Luftauslass (6b) umfasst, der an einem unteren Ende der Zinke (6') angeordnet ist.

10. Robotisches Umhüllungssystem (500) für Topfpflanzen, das robotische Umhüllungssystem umfassend:
- eine erste robotische Umhüllungsvorrichtung (11) nach einem der vorangehenden Ansprüche;
- eine erste Transportvorrichtung (101) zum Transportieren einer Halterung, die Topfpflanzen trägt, entlang eines ersten Wegs (510) zur ersten Aufnahmefläche (100), wobei sich die erste Aufnahmefläche (100) auf dem ersten Weg (510) befindet; und
- wobei die erste Transportvorrichtung (101) angeordnet ist, die Topfpflanzen so zu transportieren, dass die Greifeinheit (6) der zumindest zwei Oberarme (3, 4) unter dem Rand einer Topfpflanze (10) eingesetzt werden kann.

11. Robotisches Umhüllungssystem (500) für Topfpflanzen nach Anspruch 10, ferner umfassend:
- eine zweite Transportvorrichtung (401) zum Transportieren einer Halterung, die umhüllte Topfpflanzen (20) trägt, von der Ladefläche (400) entlang eines zweiten Wegs (520) unter dem ersten Weg (510), wobei sich die Ladefläche (400) auf dem zweiten Weg (520) befindet.

12. Robotisches Umhüllungssystem (500) für Topfpflanzen nach einem der Ansprüche 10 - 11, ferner umfassend:
- eine zweite robotische Umhüllungsvorrichtung (11') nach einem der Ansprüche 1 - 9, die an einer zweiten Seite (52) des ersten Wegs (510) angeordnet ist, und die erste robotische Umhüllungsvorrichtung (11) an einer ersten Seite (51) des ersten Wegs (510) angeordnet ist, wobei die zweite Seite (52) der ersten Seite gegenüberliegt.

13. Verfahren zum Umhüllen von Topfpflanzen mit einer robotischen Umhüllungsvorrichtung (1, 11), das Verfahren umfassend:
- Ergreifen einer ersten Topfpflanze (10) an einer ersten Position radial auswärts von einer vertikalen Welle (2) mit einer ersten Greifeinheit (6), die an einem ersten Arm (3) befestigt ist, der auf der vertikalen Welle (2) angeordnet ist;
- Freigeben einer zweiten Topfpflanze (10) an einer zweiten Position von einer zweiten Greifeinheit (6), die an einem zweiten Arm (4) befestigt ist, an eine Umhüllungseinheit (5);
- Drehen des ersten und zweiten Arms (3, 4) um die vertikale Welle (2);
- Ergreifen einer dritten Topfpflanze (10) mit der zweiten Greifeinheit (6) und Freigeben der ersten Topfpflanze (10) von der ersten Greifeinheit (6) in die Umhüllungseinheit (5), **dadurch gekennzeichnet, dass** das Verfahren ferner umfasst:
- Ergreifen der zweiten Topfpflanze an einer dritten Position unter der zweiten Position mit einer dritten Greifeinheit (23), die an einem dritten Arm (24) befestigt ist, der auf der vertikalen Welle (2) angeordnet ist;
- Freigeben einer vierten Topfpflanze an einer vierten Position von einer vierten Greifeinheit (23), die an einem vierten Arm (25) befestigt ist, wobei der vierte Arm (25) auf der vertikalen Welle (2) angeordnet ist, an einer Ladefläche (400).

14. Verfahren zum Umhüllen von Topfpflanzen nach Anspruch 13, wobei der Schritt zum Drehen des ersten und zweiten Arms (3, 4) um die vertikale Welle auch den dritten und vierten Arm (24, 25) um die vertikale Welle (2) dreht.

## Revendications

1. Dispositif robotique de manchonnage (1,11) pour plantes en pot (10), ledit dispositif comprenant :
- une tige verticale (2) ;
- au moins deux bras supérieurs (3, 4) disposés sur ladite tige verticale (2), chacun desdits au moins deux bras supérieurs (3, 4) comportant une unité de préhension (6) pour saisir et délivrer lesdites plantes en pot (10) ;
- une première zone de ramassage (100) situé à une première position radialement à l'extérieur de ladite tige verticale (2) ;
- une zone de manchonnage (200) située à une deuxième position radialement vers l'extérieur de ladite tige verticale (2) ;
- une unité de manchonnage (5) disposée au niveau de ladite zone de manchonnage (200) ;
dans lequel lesdits au moins deux bras supérieurs (3, 4) peuvent tourner entre ladite première et ladite deuxième position autour de ladite tige verticale (2), lesdits au moins deux bras supérieurs (3, 4) étant conçus pour être mobiles le long de ladite tige verticale (2) ;
**caractérisé par**
- au moins deux bras inférieurs (24,25) disposés sur ladite tige verticale (2) en-dessous desdits bras supérieurs (3, 4), chacun desdits au moins deux bras inférieurs (24,25) comportant une unité de préhension (23) pour saisir et délivrer des plantes en pot (20) ;
- une seconde zone de ramassage (300) située à une troisième position en-dessous de ladite deuxième position ;
- une zone de chargement (400) disposée à une quatrième position en-dessous de ladite première position ;
lesdits au moins deux bras inférieurs (24,25) pouvant tourner entre ladite troisième et la quatrième position autour de ladite tige verticale (2), lesdits au moins deux bras inférieurs (24,25) étant disposés de manière à être mobiles le long de ladite tige verticale (2).

2. Dispositif robotique de manchonnage (1) selon la revendication 1, dans lequel lesdites unités de préhension (6) sont conçues pour saisir une plante en pot au niveau de ladite première zone de ramassage (100) et pour délivrer ladite plante en pot (10) à ladite unité de manchonnage (5).

3. Dispositif robotique de manchonnage (11) selon la revendication 1 ou 2, dans lequel lesdits au moins deux bras inférieurs (24,25) sont extensibles.

4. Dispositif robotique de manchonnage (11) selon l'une quelconque des revendications 1 à 3, dans lequel lesdits au moins deux bras inférieurs (24,25) sont conçus pour se déplacer indépendamment l'un de l'autre le long de ladite tige verticale (2).

5. Dispositif robotique de manchonnage (11) selon l'une quelconque des revendications précédentes, dans lequel ladite unité de manchonnage (5) comprend un trou traversant (5'), une plante en pot (10) pouvant être transférée de ladite zone de manchonnage (200) à ladite seconde zone de ramassage (300) à travers ladite unité de manchonnage (5).

6. Dispositif robotique de manchonnage (11) selon l'une quelconque des revendications précédentes, dans lequel lesdits au moins deux bras supérieurs (3, 4) et/ou lesdits au moins deux bras inférieurs (24,25) sont fixés à ladite tige verticale (2) de manière à ce que lesdits au moins deux bras supérieurs (3, 4) et/ou lesdits au moins deux bras inférieurs (24,25) tournent lorsque ladite tige verticale (2) tourne autour d'un axe central (A) de ladite tige verticale (2).

7. Dispositif robotique de manchonnage (11) selon l'une quelconque des revendications précédentes, dans lequel lesdits au moins deux bras supérieurs (3, 4) sont diamétralement opposés à ladite tige verticale (2) et/ou lesdits au moins deux bras inférieurs (24,25) sont diamétralement opposés à ladite tige verticale.

8. Dispositif robotique de manchonnage (11) selon l'une quelconque des revendications précédentes, dans lequel lesdites unités de préhension (6) situées sur lesdits au moins deux bras supérieurs (3, 4) sont conçues pour être insérées horizontalement en-dessous du rebord d'une plante en pot (10) prévue dans ladite première zone de ramassage (100).

9. Dispositif robotique de manchonnage (11) selon l'une quelconque des revendications précédentes, dans lequel lesdites unités de préhension (6) situées sur lesdits au moins deux bras supérieurs (3, 4) comprennent au moins une dent (6'), et ladite au moins une dent comprend une entrée d'air (6a), un canal à air et au moins une sortie d'air (6b) disposée à une extrémité inférieure de ladite dent (6').

10. Système robotique de manchonnage (500) pour plantes en pot, comprenant :
- un premier dispositif robotique de manchonnage (11) selon l'une quelconque des revendications précédentes ;
- un premier dispositif de transport (101) pour transporter un support supportant des plantes en pot le long d'un premier parcours (510) vers ladite première zone de ramassage (100), ladite première zone de ramassage (100) se situant sur ledit premier parcours (510) ; et
- ledit premier dispositif de transport (101) étant conçu pour transporter lesdites plantes en pot de manière à ce que ladite unité de préhension (6) desdits au moins deux bras supérieurs (3, 4) puisse être insérée en dessous du rebord d'une plante en pot (10).

11. Système robotique de manchonnage (500) pour plantes en pot selon la revendication 10, comprenant en outre :
- un second dispositif de transport (401) pour transporter un support supportant des plantes en pot en manchon (20) depuis ladite zone de chargement (400) le long d'un second parcours (520) en-dessous dudit premier parcours (510), ladite zone de chargement (400) se situant sur ledit second parcours (520).

12. Système robotique de manchonnage (500) pour plantes en pot selon l'une quelconque des revendications 10 et 11, comprenant en outre :
- un second dispositif robotique de manchonnage (11') selon l'une quelconque des revendications 1 à 9 disposé sur un second côté (52) dudit premier parcours (510), et ledit premier dispositif robotique de manchonnage (11) étant disposé sur un premier côté (51) dudit premier parcours (510), ledit second côté (52) étant opposé audit premier côté.

13. Procédé de manchonnage de plantes en pot avec un dispositif robotique de manchonnage (1,11), ledit procédé comprenant :
- la saisie d'une première plante en pot (10) à une première position radialement à l'extérieur d'une tige verticale (2) avec une première unité de préhension (6) fixée à un premier bras (3) disposé sur ladite tige verticale (2) ;
- la délivrance d'une deuxième plante en pot (10) à une deuxième position par une seconde unité de préhension (6) fixée à un deuxième bras (4) vers une unité de manchonnage (5) ;
- la rotation desdits premier et deuxième bras (3, 4) autour de ladite tige verticale (2) ;
- la saisie d'une troisième plante en pot (10) avec la seconde unité de préhension (6), et la délivrance de ladite première plante en pot (10) par ladite première unité de préhension (6) vers ladite unité de manchonnage (5), **caractérisé en ce que** ce procédé comprend en outre :
- la saisie de ladite deuxième plante en pot à une troisième position en-dessous de ladite deuxième position avec une troisième unité de préhension (23) fixée à un troisième bras (24) disposé sur ladite tige verticale (2) ;
- la délivrance d'une quatrième plante en pot à une quatrième position par une quatrième unité de préhension (23) fixée à un quatrième bras (25), ledit quatrième bras (25) étant disposé sur ladite tige verticale (2) dans une zone de chargement (400).

14. Procédé de manchonnage de plantes en pot selon la revendication 13, dans lequel ladite étape de rotation desdits premier et deuxième bras (3, 4) autour de ladite tige verticale fait aussi tourner lesdits troisième et quatrième bras (24,25) autour de ladite tige verticale (2).
